# EUROPÄISCHE PATENTSCHRIFT

(11) **EP 4 450 345 B1**
(45) Veröffentlichungstag und Bekanntmachung des Hinweises auf die Patenterteilung: **08.04.2026**
(21) Anmeldenummer: 24157711.3
(22) Anmeldetag: 14.02.2024
(51) Int. Cl.: B60W 10/06, B60W 10/08, B60W 10/18, B60W 20/12, B60W 20/16, B60W 30/188, B60W 30/192, B60W 50/00, F02D 41/02

(54) **VERFAHREN ZUM BETREIBEN EINES KRAFTFAHRZEUGS, STEUERGERÄT UND KRAFTFAHRZEUG**
METHOD FOR OPERATING A MOTOR VEHICLE, CONTROL DEVICE AND MOTOR VEHICLE
PROCÉDÉ DE CONTRÔLE D'UN VÉHICULE AUTOMOBILE, DISPOSITIF DE CONTRÔLE ET VÉHICULE AUTOMOBILE

(30) Priorität: 17.04.2023 DE 102023203432
(43) Veröffentlichungstag der Anmeldung: 23.10.2024
(73) Patentinhaber: VOLKSWAGEN AG, 38440 Wolfsburg (DE)
(72) Erfinder: Baron von Ceumern-Lindenstjerna, Falk-Christian, 38124 Braunschweig (DE); Kröger, Michael, 38465 Brome (DE); Köppel, Lars, 38112 Braunschweig (DE)

(56) Entgegenhaltungen:
- DE-A1- 102020 210 167
- DE-A1- 102021 109 520
- FR-A1- 3 103 771
- US-A1- 2020 298 701

## Beschreibung

Die Erfindung betrifft ein Verfahren zum Betreiben eines Kraftfahrzeugs, insbesondere zum Bestimmen einer variablen Abfahrtsverzögerung, ein Steuergerät und ein Kraftfahrzeug.

Die EURO7-Abgasnorm erfordert eine weitere Reduzierung von Schadstoffemissionen (NOx, Partikel, CO, etc.) während eines Fahrzeugbetriebs. Grundsätzlich erfolgt diese Reduzierung in einem Fahrzeug mit einer Verbrennungskraftmaschine durch ein Abgasnachbehandlungssystem, das in einem der Verbrennungskraftmaschine nachgelagerten Abgastrakt angeordnet ist. Für eine effektive Wirkung des Abgasnachbehandlungssystems ist erforderlich, es auf eine Betriebstemperatur zu bringen, bei der eine ausreichende Konvertierungsbereitschaft zum Konvertieren der Schadstoffe in dem Abgas vorliegt. Daher ist insbesondere der Wirkungsgrad des Abgasnachbehandlungssystems unmittelbar nach einem Kaltstart vergleichsweise gering, da noch nicht die erforderliche Betriebstemperatur vorliegt.

Es ist daher bekannt, vor Beginn einer Fahrt das Abgasnachbehandlungssystem aufzuwärmen.

So offenbart die DE 10 2018 111 259 A1 ein System und ein Verfahren zum Vorkonditionieren eines Nachbehandlungskatalysators in Reaktion auf ein Vorkonditionierungssignal, das eine Startzeit des Fahrzeugs vorhersagt. Dabei erfolgt die Vorkonditionierung vor der Startzeit und entsprechend einem Konditionierungsprofil, einem Ladezustand einer Fahrzeugbatterie und einem externen Leistungssignal, das angibt, ob und wieviel Leistung von einer externen Leistungsquelle zur Verfügung steht.

Die DE 10 2019 203 598 A1 offenbart ein Verfahren zum Betreiben eines Kraftfahrzeugs mit einem Verbrennungsmotor, bei dem vor einer Abfahrt des Kraftfahrzeugs Vorheizmaßnahmen zum Erreichen von Betriebstemperaturen für Komponenten des Abgasnachbehandlungssystems und/ oder für eine Lambdasonde des Kraftfahrzeugs vorgenommen werden. Insbesondere zur Vermeidung einer unnötigen Einleitung von Vorheizmaßnahmen ist die Betätigung eines Signalgebers durch einen Fahrer des Kraftfahrzeugs zur expliziten Ankündigung einer bevorstehenden Abfahrt des Kraftfahrzeugs als Auslöser für die Vorheizmaßnahmen vorgesehen. Ferner wird beschrieben, die Abfahrt des Kraftfahrzeugs und/oder einen Motorstart zu verzögern, um erforderlichen Betriebstemperaturen zu erreichen.

Die Dokumente DE 10 2021 109520 A1, US 2020/298701 A1, FR 3 103 771 A1 offenbaren Verfahren, bei denen die Abfahrt eines Fahrzeugs nach Kaltstart solange verzögert wird, bis eine vorbestimmte Mindesttemperatur im Katalysator erreicht ist. Die DE 10 2020 210167 A1 offenbart eine vorausschauende Temperaturregelung eines Katalysators während der Fahrt.

Grundsätzlich ist für die Einhaltung der EURO7-Abgasnorm ein schnelles Aufheizen des Abgasnachbehandlungssystems bei gleichzeitig möglichst geringen Schadstoffemissionen während der Kaltstartphase erforderlich. Daher darf während der Kaltstartphase nicht zu viel Leistung freigegeben werden, die auch erhöhte Rohemissionen nach sich ziehen würde.

Zur Einhaltung der EURO7-Abgasnorm wird es in Abhängigkeit von weiteren Randbedingungen notwendig sein, für eine vorbestimmte Zeit nach (Fahrer-)Startwunsch das Fahrzeug an der Abfahrt zu hindern, d.h. eine Abfahrtsverzögerung vorzusehen. Dadurch kann sichergestellt werden, dass nicht zu viele Schadstoffe emittiert werden bis die Konvertierungsbereitschaft des Abgasnachbehandlungssystems ausreichend ist.

Jedoch sind eine Abfahrtsverzögerung bei laufender oder stehender Verbrennungskraftmaschine sowie eine Leistungsbegrenzung Maßnahmen, deren Kundenakzeptanz voraussichtlich sehr gering ist.

Aufgabe der vorliegenden Erfindung ist es, ein Verfahren, ein Steuergerät und ein Kraftfahrzeug bereitzustellen, die die oben genannten Nachteile wenigstens teilweise überwinden.

Diese Aufgabe wird durch das Verfahren nach Anspruch 1, das Steuergerät nach Anspruch 9 und das Kraftfahrzeug nach Anspruch 10 gelöst.

Weitere vorteilhafte Ausgestaltungen der Erfindung ergeben sich aus den Unteransprüchen und der folgenden Beschreibung bevorzugter Ausführungsbeispiele der vorliegenden Erfindung.

Ein erster Aspekt der Erfindung betrifft ein Verfahren zum Betreiben eines Kraftfahrzeugs mit einer Verbrennungskraftmaschine. Das Verfahren umfasst:
- Starten einer Verbrennungskraftmaschine;
- Ermitteln eines Antriebsleistungsbedarfs;
- Bestimmen einer Abfahrtverzögerung zum Erreichen einer vorbestimmten Mindesttemperatur für ein Abgasnachbehandlungssystem, wobei die vorbestimmte Mindesttemperatur abhängig ist von einer Soll-Verbrennungskraftmaschinen-Antriebsleistung, die zum Erfüllen des Antriebsleistungsbedarfs von der Verbrennungskraftmaschine bereitgestellt werden soll; und
- Ausgeben, nach Ablauf der Abfahrtverzögerung, eines Lösesignals zum Lösen einer Abfahrsperre.

Für die Auslegung einer Abfahrtsverzögerung ist entscheidend, wieviel Leistung nach der Abfahrtsverzögerung freigegeben werden soll. Das heißt, eine Länge der Abfahrtsverzögerung hängt von dem Antriebsleistungsbedarf ab. Je länger die Abfahrtsverzögerung ist, desto mehr Antriebsleistung darf bei der Abfahrt freigegeben werden. Erst wenn eine gewisse Mindestschwelle an Antriebsleistung der Verbrennungskraftmaschine unter diesen Aspekten freigegeben werden kann, wird eine Wartezeit beendet (d. h., die Abfahrtsverzögerung ist abgelaufen) und das Kraftfahrzeug darf abfahren.

Die Dauer der Abfahrtsverzögerung ist aus Kundenakzeptanzgründen so kurz wie möglich zu gestalten. Eine stets festgelegte Zeit der Abfahrtsverzögerung ist nicht wünschenswert. Denn würde der Fahrer nach Abfahrt nur eine sehr geringe Antriebsleistung benötigen, ist es wünschenswert, dass die Abfahrtsverzögerung zum Losfahren geringer ausfällt. Benötigt der Fahrer hingegen mehr Antriebsleistung, fällt die Abfahrtsverzögerung länger aus. Das vorliegende Verfahren entscheidet nun anhand von Kriterien, ob der Fahrer voraussichtlich eine geringe oder hohe Antriebsleistung benötigt und steuert bzw. bestimmt die entsprechende Abfahrtsverzögerung dynamisch.

Die Verbrennungskraftmaschine kann als ein Ottomotor oder ein Dieselmotor ausgebildet sein.

Das Starten des Verbrennungskraftmaschine entspricht einem Starten nach einem vorhergehenden Fahrzeugstillstand, bei dem sich die Verbrennungskraftmaschine in einem ausgeschalteten bzw. nicht aktiven Zustand befand. Das Starten der Verbrennungskraftmaschine kann in Reaktion auf ein entsprechendes Startsignal ausgeführt werden. Das Startsignal wird basierend auf einer Zündschlossbetätigung, einer Fahrpedalbetätigung oder einem anderem Startwunsch des Fahrers ausgegeben.

Zeitgleich kann mit dem Starten der Verbrennungskraftmaschine ein Sperrsignal ausgegeben werden, dass eine Abfahrsperre aktiviert und somit ein Losfahren des Kraftfahrzeugs verhindert. Das Sperrsignal dient dazu, das Losfahren so lange zu verzögern bzw. zu verhindern, bis das Abgasnachbehandlungssystems des Kraftfahrzeugs eine vorbestimmte Mindesttemperatur und somit eine vorbestimmte Konvertierungsbereitschaft für Schadstoffe erreicht.

Zum Aufheizen des Abgasnachbehandlungssystems kann die Verbrennungskraftmaschine nach dem Starten in einem Leerlaufzustand betrieben werden.

Das Abgasnachbehandlungssystem sitzt in einem der Verbrennungskraftmaschine nachgelagerten Abgastrakt und ist dazu eingerichtet, Schadstoffe in dem von der Verbrennungskraftmaschine ausgestoßenen Abgas zu reduzieren. Dazu umfasst das Abgasnachbehandlungssystem einen Katalysator. Zum Reduzieren der Schadstoffe muss das Abgasnachbehandlungssystem auf die vorbestimmte Mindesttemperatur aufgewärmt werden. Die vorbestimmte Mindesttemperatur für das Abgasnachbehandlungssystem hängt davon ab, wieviel Antriebsleistung durch die Verbrennungskraftmaschine (Soll-Verbrennungskraftmaschinen (VKM)-Antriebsleistung) zum Erfüllen des Antriebsleistungsbedarfs zur Verfügung gestellt werden soll.

Der Antriebsleistungsbedarf gibt an, wie hoch die (zu erwartende) Antriebsleistung ist, die nach dem Losfahren des Kraftfahrzeugs von dem Fahrer gefordert wird.

Der Antriebsleitungsbedarf kann basierend auf einem Kriterium ermittelt werden, das indikativ für einen Antriebsleistungsbedarf ist. Das Kriterium kann aus einer Vielzahl von Kriterien gewählt sein, die indikativ für einen Antriebsleistungsbedarf sind. Diese Kriterien können z. B. Navigationsdaten, Fahrzeugposition, Benutzerhistorie, Umgebungstemperatur, Fahrzeugbetriebsart, etc. umfassen. Diese Kriterien werden später näher erläutert.

Das Bestimmen der Abfahrtsverzögerung erfolgt basierend auf der Soll-VKM-Antriebsleistung, die zum Erfüllen des Antriebsleistungsbedarf bereitgestellt werden soll. Dabei ist die Abfahrtsverzögerung ein Zeitbedarf oder Zeitraum, die bzw. der zum Erreichen der vorbestimmten Mindesttemperatur des Abgasnachbehandlungssystem erforderlich ist. Während der Abfahrtsverzögerung wird das Kraftfahrzeug am Losfahren gehindert und bleibt damit im Stillstand während die Verbrennungskraftmaschine läuft und somit das Abgasnachbehandlungssystem durch das Abgas aufwärmt.

Die vorbestimmte Mindesttemperatur entspricht einer Temperatur, bei der das Abgasnachbehandlungssystem die Schadstoffe in dem Abgas derart reduziert, so dass die Schadstoffemission unterhalb eines vorbestimmten Schwellenwerts ist.

Die vorbestimmte Mindesttemperatur ist abhängig von der Soll-VKM-Antriebsleistung. Je geringer die Soll-VKM-Antriebsleistung ist, desto geringer ist auch die Schadstoffmenge im Abgas. Folglich ist auch der erforderliche Wirkungsgrad und damit die erforderliche Temperatur des Abgasnachbehandlungssystems zum Reduzieren der Schadstoffe auf den vorbestimmten Schwellenwert niedriger. Umgekehrt folgt, dass je höher die Soll-VKM-Antriebsleistung ist, desto größer ist auch Schadstoffmenge im Abgas. Folglich ist auch der erforderliche Wirkungsgrad und damit die erforderliche Temperatur des Abgasnachbehandlungssystems zur Reduzierung der Schadstoffe auf den vorbestimmten Schwellenwert höher.

Somit ist die Abfahrtverzögerung abhängig von der vorbestimmten Mindesttemperatur, die wiederum abhängig ist von der Soll-VKM-Antriebsleistung zum Erfüllen des Antriebsleistungsbedarfs. Damit liegt eine Abhängigkeit der Abfahrtsverzögerung von dem Antriebsleistungsbedarf vor.

Nach Bestimmen der Abfahrtsverzögerung wird gewartet, bis diese abgelaufen ist. Anschließend wird in Reaktion auf das Ablaufen ein Lösesignal zum Lösen der Abfahrsperre ausgegeben.

Das vorliegende Verfahren ermittelt den Antriebsleistungsbedarf und steuert so die Abfahrtsverzögerung dynamisch. Insbesondere führt die Einbeziehung der beschriebenen Kriterien zur dynamischen Abfahrtsverzögerung und damit ggf. zur Verkürzung der Abfahrtsverzögerung als Kundenkomfortfunktion.

In einer weiteren Ausführungsformen kann der Antriebsleistungsbedarf abhängig sein von mindestens einem der folgenden Kriterien:
- Navigationsdaten;
- Fahrzeugposition;
- Benutzerhistorie;
- Umgebungstemperatur; und
- Fahrzeugbetriebsart.

Die Navigationsdaten können bspw. die Geschwindigkeitsbegrenzung auf einem ersten Streckenabschnitt der Route umfassen, der nach dem Losfahren des Kraftfahrzeugs zum Erreichen des Routenziels befahren werden muss. Damit kann ein Antriebsleistungsbedarf für den ersten Streckenabschnitt ermittelt werden.

Die Fahrzeugposition gibt an, an welcher Position sich das Kraftfahrzeug gerade befindet. Daraus kann man Rückschlüsse ziehen, wie hoch der Antriebsleistungsbedarf ist. Denn je nachdem, in welcher Zone sich das Kraftfahrzeug gerade befindet, kann eine entsprechende Geschwindigkeitsgrenze vorgesehen und damit ein entsprechender Antriebsleistungsbedarf erforderlich sein. Befindet sich das Kraftfahrzeug bspw. in einer Zone mit einer Geschwindigkeitsbegrenzung im niedrigen Tempobereich (bspw. gleich oder kleiner als 30 km/h) kann davon ausgegangen werden, dass bei der Abfahrt ein vergleichsweise geringer Antriebsleistungsbedarf vorliegt. Ist das Fahrzeug in der Nähe einer Autobahn abgestellt, wird voraussichtlich ein vergleichsweise hoher Antriebsleistungsbedarf vorliegen. Auch kann aus der Fahrzeugposition eine aktuelle Neigung des Weges ableitbar sein, auf dem sich das Kraftfahrzeug gerade befindet. Dabei kann eine größere Neigung mehr Antriebsleistung erfordern.

Die Benutzerhistorie gibt das Verhalten des Fahrers in der Vergangenheit an. Daraus kann bspw. abgeleitet werden, wie hoch der Antriebsleistungsbedarf des Fahrers nach dem Losfahren ist. Dazu können Aufzeichnungen hinsichtlich eines Beschleunigungsverhaltens des Kraftfahrzeugs durch den Fahrer erfasst und ausgewertet werden. Die Benutzerhistorie kann ferner benutzerdefinierte Präferenzen hinsichtlich des Antriebsleistungsbedarfs umfassen.

Die Umgebungstemperatur bzw. die Außentemperatur kann ebenfalls die Schadstoffemission beeinflussen. So beeinflusst die Umgebungstemperatur die Temperatur der Verbrennungskraftmaschine, was wiederum die Kraftstoffverbrennung (z. B. beim Motorstart) und somit die Schadstoffemissionen beeinflusst. Beispielswiese kann eine entsprechende Temperatur der Verbrennungskraftmaschine zu einer Verschlechterung der Verbrennung und somit zu einer Verschlechterung der Schadstoffemissionen führen.

Weiterhin kann das Kriterium auch ein Erkennen einer Fahrzeugbetriebsart, bspw. eines Hängerbetriebes sein, der einen höheren Antriebsleistungsbedarf aufweist.

Anhand dieser Kriterien kann das dynamische Bestimmen der Abfahrtsverzögerung weiter präzisiert werden.

In einer weiteren Ausführungsform kann das Verfahren ferner umfassen:
- Ermitteln einer Summen-Antriebsleistung zum Erfüllen des Antriebsleistungsbedarfs, wobei die Summen-Antriebsleistung die Soll-Verbrennungskraftmaschinen-Antriebsleistung und eine Soll-Motor-Antriebsleistung umfasst, wobei die Soll-Motor-Antriebsleistung durch eine elektrische Maschine des Kraftfahrzeugs bereitgestellt werden soll.

Die elektrische Maschine ist in dem Kraftfahrzeug angeordnet und mit einem elektrischen Energiespeicher gekoppelt. Die elektrische Maschine ist derart in dem Antriebsstrang angeordnet, dass sie (neben der Verbrennungskraftmaschine) einen Beitrag zur Antriebsleistung leisten kann. Beispielsweise kann das Kraftfahrzeug als P1-Hybrid ausgebildet sein, bei dem die elektrische Maschine an der Verbrennungskraftmaschine angeordnet ist. Dabei kann die elektrische Maschine direkt mit der Kurbelwelle der Verbrennungskraftmaschine gekoppelt sein. Alternativ kann die elektrische Maschine als Riemenstartergenerator mit der Kurbelwelle gekoppelt sein. In weiteren Beispielen kann das Kraftfahrzeug eine andere parallele Hybridanordnung (P2, P3 oder P4) aufweisen.

Die Summen-Antriebsleistung setzt sich zusammen aus der Soll-Motor-Antriebsleistung und der Soll-VKM-Antriebsleistung und entspricht der Leistung, die zum Erfüllen des Antriebsleistungsbedarf benötigt wird. Dabei kann der Anteil der Motor-Antriebsleistung unter Umständen auch null sein, wenn bspw. der Ladezustand des Energiespeichers zu gering ist, so dass die elektrische Maschine keine Antriebsleistung zur Verfügung stellen kann.

Die Abfahrtsverzögerung kann weiter verringert werden, indem die Soll-VKM-Antriebsleistung zum Umsetzen des Antriebsleistungsbedarfs verringert wird und die reduzierte Soll-VKM-Antriebsleistung durch die Soll-Motor-Antriebsleistung kompensiert wird.

In einer weiteren Ausführungsform kann die Soll-Motor-Antriebsleistung abhängig sein von einem Ladezustand des mit der elektrischen Maschine gekoppelten Energiespeichers des Kraftfahrzeugs. Die Motor-Antriebsleistung ist grundsätzlich abhängig von dem Ladezustand des elektrischen Energiespeichers. Das heißt, dass die Soll-Motor-Antriebsleistung je nach Ladezustand des elektrischen Energiespeichers bestimmt werden kann.

In einer weiteren Ausführungsform kann die Motor-Antriebsleistung abhängig sein von einer Hybrid-Betriebsstrategie des Kraftfahrzeugs. Mit Hybrid-Betriebsstrategie ist eine Betriebsart des Antriebsstrangs gemeint, d. h. ob ein rein verbrennungsmotorischer, rein elektrischer oder ein hybrider Fahrbetrieb vorliegt. Dabei kann bspw. die Hybrid-Betriebsstrategie umfassen, dass bei einem ersten vorbestimmten Ladezustand des elektrischen Energiespeichers nur der rein verbrennungsmotorischer Fahrbetrieb vorgesehen ist, so dass die Soll-Motor-Antriebsleistung gleich null ist und der Antriebsleistungsbedarf allein durch die VKM-Antriebleistung erfüllt werden muss. Die Hybrid-Betriebsstrategie kann ferner umfassen, dass bei einem zweiten vorbestimmten Ladezustand des elektrischen Energiespeichers der hybride Fahrbetrieb angewendet werden kann.

In einer weiteren Ausführungsform kann das Verfahren ferner umfassen:
- Aufheizen des Abgasnachbehandlungssystems auf die vorbestimmte Mindesttemperatur mittels verbrennungskraftmaschinenseitigen Maßnahmen.

Mit verbrennungskraftmaschinenseitigen Maßnahmen sind solche gemeint, die keine zusätzliche externe Heizvorrichtung zum Aufheizen des Abgasnachbehandlungssystems erfordern. Beispielsweise kann eine Temperatur des Abgases durch eine Zündwinkelverstellung nach spät und/oder eine Erhöhung der Leerlaufdrehzahl der Verbrennungskraftmaschine erfolgen. Dadurch kann das Abgasnachbehandlungssystems schneller auf die vorbestimmte Mindesttemperatur erwärmt werden.

In einer weiteren Ausführungsform kann die Abfahrtsverzögerung abhängig sein von einer Ist-Temperatur des Abgasnachbehandlungssystems. Insbesondere nach einer kürzen Stillstandphase kann es sein, dass das Abgasnachbehandlungssystems noch Restwärme aus einem vorherigen Fahrbetrieb aufweist. Entsprechend verkürzt sich die Zeit, die zum Aufheizen des Abgasnachbehandlungssystems auf die vorbestimmte Mindesttemperatur benötigt wird. Durch die Berücksichtigung der Ist-Temperatur kann die Abfahrtsverzögerung genauer bestimmt werden.

In einer weiteren Ausführungsform kann das Bestimmen der Abfahrtverzögerung basierend auf einem Kennfeld erfolgen. Das Kennfeld kann bspw. durch Versuche am Teststand ermittelt werden. In dem Kennfeld ist eine Beziehung zwischen Antriebsleistungsbedarf und einer erforderlichen Zeitspanne, die zum Erreichen der vorbestimmten Mindesttemperatur (Abfahrtverzögerung) erforderlich ist, hinterlegt ist.

In einer weiteren Ausführungsform kann das Bestimmen der Abfahrtverzögerung basierend auf einem physikalischen Modell erfolgen. In diesem Fall können aufwendige Testversuche zum Erstellen eines Kennfelds vermieden werden.

Ein zweiter Aspekt der Erfindung betrifft ein Steuergerät, das eingerichtet ist, eines der oben beschriebenen Verfahren durchzuführen.

Ein dritter Aspekt der Erfindung betrifft ein Kraftfahrzeug mit dem oben beschriebenen Steuergerät, wobei das Kraftfahrzeug eingerichtet ist, eines der oben beschriebenen Verfahren durchzuführen.

Ausführungsbeispiele der Erfindung werden nun beispielhaft und unter Bezugnahme auf die beigefügte Zeichnung beschrieben. Dabei zeigt:
Fig. 1 schematisch ein Kraftfahrzeug mit einem Abgasnachbehandlungssystems; und
Fig. 2 als Blockdiagramm ein Verfahren zum Betreiben des Kraftfahrzeugs aus Fig. 1.

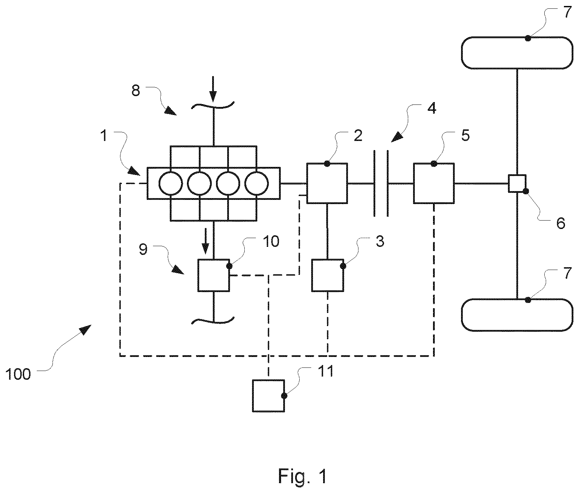

Fig. 1 zeigt schematisch ein Kraftfahrzeug 100 mit einer Verbrennungskraftmaschine 1. Die Verbrennungskraftmaschine 1 kann als ein Otto- oder Dieselmotor ausgebildet sein. Die Verbrennungskraftmaschine 1 ist über eine Kupplung 4 mit einem Getriebe 5 koppelbar für eine Antriebsleistungsübertragung. Das Getriebe 5 kann bspw. als ein Doppelkupplungsgetriebe oder ein Automatikgetriebe ausgebildet sein. Zum Betätigen der Kupplung 4 kann ein Handschalter mit e-Clutch vorgesehen sein. Das Getriebe 5 überträgt die Antriebsleistung der Verbrennungskraftmaschine 1 über ein Differential 6 auf die Antriebsräder 7.

Das Kraftfahrzeug 100 umfasst antriebsstrangsseitig ferner eine elektrische Maschine 2. Die elektrische Maschine 2 ist mit einem elektrischen Energiespeicher 3 verbunden, der die elektrische Maschine 2 mit elektrischer Energie versorgt. In dem in Fig. 1 gezeigten Beispiel ist das Kraftfahrzeug als Mildhybrid (mHEV) ausgebildet, wobei die elektrische Maschine 2 auf die Kurbelwelle der Verbrennungskraftmaschine 1 wirkt. Die elektrische Maschine 2 kann bspw. Riemenstartergenerator ausgebildet sein oder direkt auf die Kurbelwelle angeordnet sein.

In einem nicht gezeigten Beispiel kann die elektrische Maschine 2 in einer andere beliebigen parallelen Anordnung zur Verbrennungskraftmaschine 1 angeordnet sein und bspw. zusätzlich zu einem Riemenstartergenerator vorgesehen sein. In anderen Beispielen kann das Kraftfahrzeug 100 als ein Plug-in-Hybrid (PHEV) ausgebildet sein.

Die elektrische Maschine 2 kann ebenfalls eine Antriebsleistung (Motor-Antriebsleistung) zum Erfüllen eines Antriebsleistungsbedarf zusätzlich zu einer VKM-Antriebsleistung der Verbrennungskraftmaschine 1 bereitstellen.

Die Verbrennungskraftmaschine 1 wird über eine Frischluftzufuhr 8 mit Frischluft für eine Verbrennung in (nicht gezeigten) Zylindern der Verbrennungskraftmaschine 1 versorgt. Das durch die Verbrennung entstehende Abgas wird über einen Abgastrakt 9 von der Verbrennungskraftmaschine 1 abgeführt. Zum Nachbehandeln des Abgases, insbesondere für eine Reduzierung von Schadstoffen, ist in dem Abgastrakt 9 ein Abgasnachbehandlungssystems 10 vorgesehen, das einen Katalysator umfasst.

Ferner ist ein Steuergerät 11 in dem Kraftfahrzeug 100 vorgesehen zur Überwachung und/oder Steuerung der Verbrennungskraftmaschine 1, der elektrische Maschine 2, des elektrischen Energiespeichers 3, des Getriebes 5 und des Abgasnachbehandlungssystems 10.

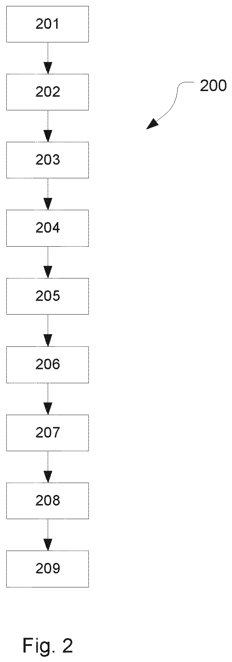

Für eine ausreichende Schadstoffreduzierung muss das Abgasnachbehandlungssystems auf eine vorbestimmte Mindesttemperatur erwärmt werden. Um eine ausreichende Erwärmungszeit zu gewährleisten nach einem Start des Kraftfahrzeugs 100 wird das in Fig. 2 gezeigte Verfahren 200 angewendet.

Im Block 201 erfolgt ein Starten der Verbrennungskraftmaschine 1. Zeitgleich kann auch ein Sperrsignal durch das Steuergerät 11 ausgegeben werden, dass eine Abfahrsperre für das Kraftfahrzeug 100 aktiviert und somit ein Losfahren des Kraftfahrzeugs 100 unterbindet.

Im Block 202 erfolgt ein Ermitteln eines Antriebsleistungsbedarfs, der voraussichtlich nach dem Losfahren des Kraftfahrzeugs 100 benötigt wird. Dabei kann der Antriebsleistungsbedarf basierend auf mindestens einem der folgenden Kriterien ermittelt werden: Navigationsdaten, Fahrzeugposition, Benutzerhistorie, Umgebungstemperatur und Fahrzeugbetriebsart.

Im optionalen Block 203 erfolgt ein Ermitteln einer Soll-Motor-Antriebsleistung, die durch die elektrische Maschine 2 zum Erfüllen des Antriebsleistungsbedarfs bereitgestellt werden soll. Die Soll-Motor-Antriebsleistung kann abhängig von einem Ladezustand des elektrischen Energiespeichers 3 sein. Die Soll-Motor-Antriebsleistung kann auch null betragen, wenn bspw. der Ladezustand des elektrischen Energiespeichers 3 nicht ausreicht, um die elektrische Maschine 2 als Antriebsmotor zu betreiben.

Im Block 204 erfolgt ein Ermitteln einer Soll-VKM-Antriebsleistung, die durch die Verbrennungskraftmaschine 1 zum Erfüllen des Antriebsleistungsbedarf bereitgestellt werden soll.

Im optionalen Block 205 erfolgt ein Ermitteln einer Summen-Antriebsleistung. Die Summen-Antriebleistung umfasst die Soll-VKM-Antriebsleistung und die Soll-Motor-Antriebsleitung. In Beispielen, in welchen keine Motor-Antriebsleistung bereitgestellt wird, kann der Block 205 entfallen. In manchen Beispielen ist die Soll-Motor-Antriebsleistung gleich null, dann entspricht die Summen-Antriebsleistung der Soll-VKM-Antriebsleistung.

Im Block 206 erfolgt ein Ermitteln der vorbestimmten Mindesttemperatur für das Abgasnachbehandlungssystem 10 für eine effektive Schadstoffreduzierung, wobei die vorbestimmte Mindesttemperatur von der Soll-VKM-Antriebsleistung abhängt.

Im Block 207 erfolgt ein Ermitteln der Abfahrtsverzögerung zum Erreichen der vorbestimmten Mindesttemperatur. Die Abfahrtsverzögerung kann bspw. aus einem Kennfeld ermittelt werden, in welchem Abfahrtsverzögerungen im Zusammenhang mit vorbestimmten Mindesttemperatur abgelegt sind. Zusätzlich kann die Abfahrtsverzögerung auch davon abhängen, welche Ist-Temperatur das Abgasnachhandlungssystem 10 aufweist.

Im Block 208 erfolgt ein Aufheizen, während der Abfahrtsverzögerung, des Abgasnachhandlungssystems 10 zum Erreichen der vorbestimmten Mindesttemperatur.

Im Block 209 erfolgt ein Ausgeben eines Lösesignals (oder auch Abfahrsignal) nachdem die Abfahrtsverzögerung abgelaufen ist. In der Regel entspricht nach Ablauf der Abfahrtsverzögerung die Ist-Temperatur des Abgasnachhandlungssystems 10 der vorbestimmten Mindesttemperatur. Entsprechend weist das Abgasnachhandlungssystem 10 einen ausreichend Wirkungsgrad für eine Schadstoffreduzierung vor, so dass das Kraftfahrzeug 100 losfahren kann. Zum Lösen (Deaktivieren) der Abfahrsperre wird durch das Steuergerät 11 das Lösesignal ausgegeben, so dass der Fahrer das Kraftfahrzeug 100 bewegen kann.

### Bezugszeichenliste

- 1: Verbrennungskraftmaschine
- 2: Elektrische Maschine
- 3: Elektrischer Energiespeicher
- 4: Kupplung
- 5: Getriebe
- 6: Differenzial
- 7: Antriebsräder
- 8: Frischluftzufuhr
- 9: Abgastrakt
- 10: Abgasnachbehandlungssystem
- 11: Steuergerät
- 100: Kraftfahrzeug
- 200: Verfahren
- 201: Starten der Verbrennungskraftmaschine
- 202: Ermitteln eines Antriebsleistungsbedarfs
- 203: Ermitteln einer Soll-Motor-Antriebsleistung
- 204: Ermitteln einer Soll-VKM-Antriebsleistung
- 205: Ermitteln einer Summen-Antriebsleistung
- 206: Ermitteln der vorbestimmten Mindesttemperatur
- 207: Ermitteln der Abfahrtsverzögerung
- 208: Aufheizen des Abgasnachhandlungssystems
- 209: Ausgeben eines Lösesignals

## Patentansprüche

1. Verfahren (200) zum Betreiben eines Kraftfahrzeugs (100) mit einer Verbrennungskraftmaschine (1), umfassend:
- Starten (201) einer Verbrennungskraftmaschine (1);
- Ermitteln (202) eines Antriebsleistungsbedarfs:
- Bestimmen (207) einer Abfahrtsverzögerung zum Erreichen einer vorbestimmten Mindesttemperatur für ein Abgasnachbehandlungssystem (10); und
- Ausgeben (209), nach Ablauf der Abfahrtsverzögerung, eines Lösesignals zum Lösen einer Abfahrsperre,
**dadurch gekennzeichnet, dass** die vorbestimmte Mindesttemperatur abhängig ist von einer Soll-Verbrennungskraftmaschinen-Antriebsleistung, die zum Erfüllen des Antriebsleistungsbedarfs von der Verbrennungskraftmaschine (1) bereitgestellt werden soll.

2. Verfahren (200) nach Anspruch 1, wobei der Antriebsleistungsbedarf abhängig ist von mindestens einem der Folgenden ist:
- Navigationsdaten;
- Fahrzeugposition;
- Benutzerhistorie;
- Umgebungstemperatur; und
- Fahrzeugbetriebsart.

3. Verfahren (200) nach Anspruch 1 oder 2, ferner umfassend:
- Ermitteln (205) einer Summen-Antriebsleistung zum Erfüllen des Antriebsleistungsbedarfs, wobei die Summen-Antriebsleistung die Soll-Verbrennungskraftmaschinen-Antriebsleistung und eine Soll-Motor-Antriebsleistung umfasst, wobei die Soll-Motor-Antriebsleistung durch eine elektrische Maschine (2) des Kraftfahrzeugs (100) bereitgestellt werden soll.

4. Verfahren (200) nach Anspruch 3, wobei die Soll-Motor-Antriebsleistung abhängig ist von einem Ladezustand eines mit der elektrischen Maschine (2) gekoppelten Energiespeichers (3) des Kraftfahrzeugs (100).

5. Verfahren (200) nach Anspruch 3 oder 4, wobei die Soll-Motor-Antriebsleistung abhängig ist von einer Antriebsstrategie des Kraftfahrzeugs (100).

6. Verfahren (200) nach einem der vorherigen Ansprüche, ferner umfassend:
- Aufheizen (208) des Abgasnachbehandlungssystems (10) auf die vorbestimmte Mindesttemperatur mittels verbrennungskraftmaschinenseitigen Maßnahmen.

7. Verfahren (200) nach einem der vorherigen Ansprüche, wobei die Abfahrtsverzögerung abhängig ist von einer Ist-Temperatur des Abgasnachbehandlungssystems.

8. Verfahren (200) nach einem der vorherigen Ansprüche, wobei das Bestimmen der Abfahrtsverzögerung basierend auf einem Kennfeld erfolgt.

9. Steuergerät (11), das eingerichtet ist, ein Verfahren nach einem der Ansprüche 1 bis 8 durchzuführen.

10. Kraftfahrzeug (100) mit einem Steuergerät (11) nach Anspruch 9, wobei das Kraftfahrzeug (100) eingerichtet ist, ein Verfahren nach einem der Ansprüche 1 bis 8 durchzuführen.

## Claims

1. Method (200) for operating a motor vehicle (100) having an internal combustion engine (1), the method comprising:
- starting (201) an internal combustion engine (1);
- ascertaining (202) a drive power requirement;
- determining (207) a departure delay to reach a predetermined minimum temperature for an exhaust gas aftertreatment system (10); and
- issuing (209), after the departure delay has elapsed, a release signal to release a departure lock,
**characterized in that** the predetermined minimum temperature is dependent on a target internal combustion engine drive power which is to be provided by the internal combustion engine (1) to meet the drive power requirement.

2. Method (200) according to claim 1, wherein the drive power requirement is dependent on at least one of the following:
- navigation data;
- vehicle position;
- user history;
- ambient temperature; and
- vehicle operating mode.

3. Method (200) according to claim 1 or 2, further comprising:
- ascertaining (205) a total drive power for meeting the drive power requirement, wherein the total drive power comprises the target internal combustion engine drive power and a target motor drive power, wherein the target motor drive power is to be provided by an electric machine (2) of the motor vehicle (100).

4. Method (200) according to claim 3, wherein the target motor drive power is dependent on a charge state of an energy storage device (3) of the motor vehicle (100) coupled to the electric machine (2).

5. Method (200) according to claim 3 or 4, wherein the target motor drive power is dependent on a drive strategy of the motor vehicle (100).

6. Method (200) according to any of the preceding claims, further comprising:
- heating (208) the exhaust gas aftertreatment system (10) to the predetermined minimum temperature by means of internal combustion engine measures.

7. Method (200) according to any of the preceding claims, wherein the departure delay is dependent on an actual temperature of the exhaust gas aftertreatment system.

8. Method (200) according to any of the preceding claims, wherein the departure delay is determined on the basis of a characteristic map.

9. Controller (11) which is configured to carry out a method according to any of claims 1 to 8.

10. Motor vehicle (100) having a controller (11) according to claim 9, wherein the motor vehicle (100) is configured to carry out a method according to any of claims 1 to 8.

## Revendications

1. Procédé (200) permettant de faire fonctionner un véhicule automobile (100) comportant un moteur à combustion interne (1), comprenant :
- le démarrage (201) d'un moteur à combustion interne (1) ;
- la détermination (202) d'une puissance d'entraînement nécessaire ;
- la définition (207) d'une temporisation de départ pour atteindre une température minimale prédéfinie pour un système de post-traitement des gaz d'échappement (10) ; et
- l'émission (209), après l'écoulement de la temporisation de départ, d'un signal de libération pour libérer un blocage de départ, **caractérisé en ce que** la température minimale prédéfinie dépend d'une puissance d'entraînement de consigne de moteur à combustion interne qui doit être fournie par le moteur à combustion interne (1) pour satisfaire à la puissance d'entraînement nécessaire.

2. Procédé (200) selon la revendication 1, dans lequel la puissance d'entraînement nécessaire dépend d'au moins l'un des éléments suivants :
- données de navigation ;
- position de véhicule ;
- historique des utilisateurs ;
- température ambiante ; et
- mode de fonctionnement de véhicule.

3. Procédé (200) selon la revendication 1 ou 2, comprenant en outre :
- la détermination (205)
d'une puissance d'entraînement totale pour satisfaire à la puissance d'entraînement nécessaire, dans lequel la puissance d'entraînement totale comprend la puissance d'entraînement de consigne de moteur à combustion interne et une puissance d'entraînement de consigne de moteur, dans lequel la puissance d'entraînement de consigne de moteur doit être fournie par une machine électrique (2) du véhicule automobile (100).

4. Procédé (200) selon la revendication 3, dans lequel la puissance d'entraînement de consigne de moteur dépend d'un état de charge d'un accumulateur d'énergie (3) du véhicule automobile (100) accouplé à la machine électrique (2).

5. Procédé (200) selon la revendication 3 ou 4, dans lequel la puissance d'entraînement de consigne de moteur dépend d'une stratégie d'entraînement du véhicule automobile (100).

6. Procédé (200) selon l'une des revendications précédentes, comprenant en outre :
- le chauffage (208) du système de post-traitement des gaz d'échappement (10) à la température minimale prédéfinie au moyen de mesures prises côté moteur à combustion interne.

7. Procédé (200) selon l'une des revendications précédentes, dans lequel la temporisation de départ dépend d'une température réelle du système de post-traitement des gaz d'échappement.

8. Procédé (200) selon l'une des revendications précédentes, dans lequel la définition de la temporisation de départ est effectuée sur la base d'un diagramme caractéristique.

9. Appareil de commande (11), lequel est configuré pour exécuter un procédé selon l'une des revendications 1 à 8.

10. Véhicule automobile (100) comportant un appareil de commande (11) selon la revendication 9, dans lequel le véhicule automobile (100) est configuré pour exécuter un procédé selon l'une des revendications 1 à 8.
